# EUROPÄISCHE PATENTSCHRIFT

(11) **EP 2 726 355 B1**
(45) Veröffentlichungstag und Bekanntmachung des Hinweises auf die Patenterteilung: **26.05.2021**
(21) Anmeldenummer: 12730892.2
(22) Anmeldetag: 21.06.2012
(51) Int. Cl.: B60W 50/00

(54) **STEUEREINHEIT ZUM BETREIBEN EINES KRAFTFAHRZEUGS**
CONTROL UNIT FOR OPERATING A MOTOR VEHICLE
UNITÉ DE COMMANDE DESTINÉE À FAIRE FONCTIONNER UN VÉHICULE À MOTEUR

(30) Priorität: 29.06.2011 DE 102011078271
(43) Veröffentlichungstag der Anmeldung: 07.05.2014
(73) Patentinhaber: Bayerische Motoren Werke Aktiengesellschaft, 80809 München (DE)
(72) Erfinder: PICHLER, Christian, 80637 München (DE); FRÖSCHL, Joachim, 82211 Herrsching (DE); HATTENKOFER, Martin, 84164 Moosthenning (DE)
(86) Internationale Anmeldenummer: PCT/EP2012/061980
(87) Internationale Veröffentlichungsnummer: WO 2013/000816

(56) Entgegenhaltungen:
- WO-A2-2004/014699
- DE-A1- 10 044 319
- DE-A1-102007 050 773
- DE-A1-102009 011 156

## Beschreibung

Die Erfindung betrifft eine Steuereinheit zum Betreiben eines Kraftfahrzeugs, das eine Mehrzahl an Aktuatoren aufweist.

Aufgrund einer geringen CO₂-Emission nimmt das Interesse an batteriebetriebenen Fahrzeugen, insbesondere an Fahrzeugen mit Hybridantrieb, sehr stark zu. Fahrzeuge mit einer hybriden Antriebsstruktur weisen einen Verbrennungsmotor und vorzugsweise zumindest eine elektrische Maschine als Antriebsaggregat auf. So kann das Antriebsmoment während des Fahrbetriebs des Hybridfahrzeuges von beiden Antriebsaggregaten aufgebracht werden. Ein Energie-Management-System in dem Fahrzeug wertet hierfür Daten von einer Motor- und Fahrwerkssteuerung sowie von Sensoren der Fahrerassistenz-Systeme aus. Je nach Anforderung kann eine Ansteuerung der elektrischen Maschine und/oder des Verbrennungsmotor je nach Anforderung verbrauchsoptimiert, leistungsoptimiert oder schadstoffoptimiert erfolgen. Auch bei Fahrzeugen, die nur einen Verbrennungsmotor als Antriebsaggregat aufweisen, nimmt aufgrund einer ansteigenden Zahl elektrischer Verbraucher und einer damit verbundenen zunehmenden Leistungsaufnahme die Bedeutung des Energiemanagementsystems im Kraftfahrzeug zu.

DE 10 2009 011 156 A1 offenbart eine Vorrichtung zur Steuerung und Regelung eines Antriebssystems, die einen Computerprogrammcode umfasst, wobei der Computerprogrammcode in mehrere Blöcke strukturiert ist, wobei die Blöcke Funktionen zur Steuerung und Regelung eines Antriebssystems als abgrenzbare Bestandteile des Computerprogrammcodes umfassen.

DE 100 44 319 A1 offenbart ein elektronisches System für ein Fahrzeug, mit ersten Komponenten zur Durchführung von Steuerfunktionen in betrieblichen Prozessen und zweiten Komponenten zur Koordinierung eines Zusammenwirkens der Komponenten zur Durchführung von Steuerfunktionen.
Die Aufgabe, die der Erfindung zugrunde liegt, ist, eine Steuereinheit zum Betreiben eines Kraftfahrzeugs zu schaffen, die einen Beitrag leistet dazu, dass das Kraftfahrzeug zuverlässig betrieben werden kann sowie ein Energie-Management in dem Kraftfahrzeug zu vereinfachen und zu verbessern.
Die Aufgabe wird gelöst durch die Merkmale des unabhängigen Patentanspruchs. Vorteilhafte Weiterbildungen der Erfindung sind in den Unteransprüchen gekennzeichnet.

Die Erfindung zeichnet sich aus durch eine Steuereinheit zum Betreiben eines Kraftfahrzeugs, das eine Mehrzahl an Aktuatoren aufweist. Die Steuereinheit umfasst ein Basismodul und ein Funktionsmodul, das in einer gesicherten Laufzeitumgebung ausgebildet ist. Ferner umfasst die Steuereinheit eine vorgegebene erste und eine zweite Schnittstelle, die jeweils das Basismodul und das Funktionsmodul koppeln. Das Basismodul ist ausgebildet, abhängig von zumindest einer Betriebsgröße, die einen Betriebszustand und/oder Fahrzustand und/oder einen Umgebungszustand des Kraftfahrzeugs charakterisiert, eine oder mehrere Funktionseingangsgrößen, die ein Systemverhalten des Fahrzeugs unabhängig von einer aktuellen Sensorkonfiguration des Fahrzeugs charakterisieren, zu ermitteln und die Funktionseingangsgrößen an der ersten Schnittstelle bereitzustellen. Ferner ist das Basismodul ausgebildet, abhängig von einer oder mehreren Ausgangsgrößen, die ein gewünschtes Systemverhalten des Fahrzeugs unabhängig von einer aktuellen Aktuator-Konfiguration des Fahrzeugs charakterisieren und die an der zweiten Schnittstelle bereitgestellt werden, Stellgrößen der Aktuatoren zu ermitteln. Das Funktionsmodul ist ausgebildet, abhängig von den an der ersten Schnittstelle bereitgestellten Funktionseingangsgrößen und einer vorgegebenen Menge an Regeln die eine Ausgangsgröße oder die Ausgangsgrößen zu ermitteln, und die Ausgangsgrößen an der zweiten Schnittstelle bereitzustellen, wobei die Regeln bedingte Anweisungen umfassen und die Ausgangsgrößen eine Betriebsstrategie aus einer Menge von vorgegebenen Betriebsstrategien charakterisieren.

Unter Laufzeitumgebung ist ein Softwareprogramm zu verstehen, das gemeinsam mit einem Anwendungsprogramm, das nicht direkt mit einem Betriebssystem kommunizieren kann, ausgeführt wird. Die Laufzeitumgebung bewirkt, dass das Anwendungsprogramm auf einer jeweiligen Prozessorplattform ausführbar ist, indem es zwischen Anwendungsprogramm und Betriebssystem vermittelt. Unter Prozessorplattform ist hierbei die Gesamtheit der zur Programmausführung verwendeten Hardware zu verstehen, insbesondere der eigentliche Mikroprozessor und/oder Mikrocontroller sowie flüchtige und nichtflüchtige Speicher, die bei der Programmausführung zur Ablage von Daten verwendet werden. Die gesicherte Laufzeitumgebung ermöglicht eine geschützte Ausführung von Programmen. Die Programme werden hierbei derart von einem weiteren System abgeschirmt, dass das Ausführen der Programme keine unerwünschte Auswirkung auf das weitere System hat. Die gesicherte Laufzeitumgebung wird auch als Sandbox bezeichnet. Eine Ausbildung des Funktionsmoduls in der gesicherten Laufzeitumgebung ermöglicht, dass der Programmcode des Funktionsmoduls abgeschirmt von dem Basismodul ausgeführt werden kann, so dass die Ausführung des Programmcodes des Funktionsmoduls keine unerwünschte Auswirkungen auf das Basismodul hat, zum Beispiel in Form von Speicherkorruption und/oder fehlerhaften Sprungbefehlen. Ferner ermöglicht dies, dass der Programmcode des Funktionsmoduls unabhängig von dem Basismodul geändert werden kann. Die Ausbildung des Funktionsmoduls in der gesicherten Laufzeitumgebung kann ferner ermöglichen, dass der Programmcode für das Funktionsmodul unabhängig von einem Programmcode des Basismoduls von einer geeignet ausgebildeten Programmiervorrichtung auf die Steuereinheit übertragen werden kann.

Die jeweilige Betriebsgröße kann eine Messgröße oder eine Zustandsgröße oder eine weitere aus Messgrößen und/oder Zustandsgrößen abgeleitete Größe umfassen. Die jeweilige Betriebsgröße kann einen Betriebszustand und/oder Fahrzustand und/oder einen Umgebungszustand des Kraftfahrzeugs charakterisieren. Vorzugsweise erfolgt das Ermitteln der zumindest einen Funktionseingangsgröße derart, dass die zumindest eine Funktionseingangsgröße ein Systemverhalten des Kraftfahrzeugs charakterisiert unabhängig von einer aktuellen Sensorkonfiguration. Solch eine Abstraktion der zumindest einen Funktionseingangsgröße ermöglicht vorteilhafterweise, dass bei einer Änderung der Sensorkonfiguration nur das Ermitteln der zumindest einen Funktionseingangsgrößen geändert werden muss, nicht aber die Betriebsstrategie und/oder die Menge der Regeln. Analog charakterisiert die zumindest eine Ausgangsgröße ein gewünschtes Systemverhalten, das mittels der Aktuatoren umgesetzt werden kann. Die zumindest eine Ausgangsgröße ist daher vorzugsweise unabhängig von einer Aktuatorkonfiguration.

Das Ermitteln der Ausgangsgrößen, die jeweils eine Betriebsstrategie charakterisieren, abhängig von der Menge an vorgegebenen Regeln ermöglicht, in einfacher Weise ein abstraktes Funktionsmodell des Kraftfahrzeugs vorzugeben unabhängig von einer Sensor- und/oder Aktuatorkonfiguration. Dies kann einen Beitrag leisten, eine Wartbarkeit zumindest eines Teils des Steuer- und/Regelungssystems des Kraftfahrzeugs zu vereinfachen und zu verbessern. Ferner ermöglicht es, dass die Betriebsstrategien einfach angepasst und/oder verbessert werden können und/oder sehr einfach weitere Betriebsstrategien hinzugefügt werden können. Dies kann wiederum einen Beitrag leisten, eine Fehlerwahrscheinlichkeit bei der Entwicklung des Funktionsmodells zu reduzieren und/oder Entwicklungskosten zu senken und/oder eine Zuverlässigkeit des Kraftfahrzeugs zu erhöhen. Ferner kann dies einen Beitrag leisten, eine Komplexität des Steuer- und/oder Regelungssystems des Kraftfahrzeugs zu reduzieren und/oder bei gleichbleibender Komplexität eine Funktionalität des Steuer- und/oder Regelungssystems des Kraftfahrzeugs zu erweitern.

Die Regeln weisen bedingte Anweisungen auf. Solche Regeln werden umgangssprachlich auch als Wenn-Dann-Bedingungen bezeichnet. Dies ermöglicht, das Funktionsmodell mit einer geringen Anzahl von einfachen Sprachelementen und/oder Syntaxelementen zu beschreiben. Das Funktionsmodell kann dadurch einfacher und verständlich sein, wodurch eine Anpassung und/oder Fehlersuche wesentlich einfacher möglich ist.

Mittels der Betriebsstrategie wird vorzugsweise die Art der Bereitstellung der benötigten Energie vorgegeben und/oder Verbrauchern jeweils ein maximal zustehender Energieanteil der bereitgestellten Energie vorgegeben. Für das Kraftfahrzeug können Betriebsstrategien vorgegeben werden, die verschiedenen hierarchischen Ebenen der Energieverteilung im Kraftfahrzeug zugeordnet werden können. Die Betriebsstrategie kann sich auf einzelne Komponenten des Kraftfahrzeugs beziehen, zum Beispiel auf eine Komponente zur Energiewandlung, beispielsweise auf einen Generator. Ferner kann sich die Betriebsstrategie auf eine Einheit mit mehreren Komponenten des Kraftfahrzeugs beziehen, zum Beispiel auf ein Niedervoltbordnetz des Kraftfahrzeugs. Die Betriebsstrategie kann sich ferner auf ein Teilsystem des Kraftfahrzeugs, das mehrere Einheiten umfasst, beziehen, beispielsweise auf ein Gesamtbordnetz des Kraftfahrzeugs, das das Niedervoltbordnetz und ein Hochvoltbordnetz umfasst. Eine erste Betriebsstrategie kann beispielsweise sein, dass eine Hybridantriebsvorrichtung eines Hybridkraftfahrzeugs rein elektrisch betrieben wird. Eine zweite Betriebsstrategie kann beispielsweise sein, dass die Hybridantriebsvorrichtung rein brennkraftmotorisch betrieben wird. Eine dritte Betriebsstrategie kann beispielsweise sein, dass die Hybridantriebsvorrichtung in einem Mischbetrieb betrieben wird. Eine vierte Betriebsstrategie kann beispielsweise sein, dass das Kraftfahrzeug in einem Rekuperationsbetrieb betrieben wird.

In einer vorteilhaften Ausgestaltung ist das Funktionsmodul ausgebildet, die zumindest eine Funktionseingangsgröße abhängig von einer vorgegebenen Aggregationsfunktion zu ermitteln. Hierbei können vorgegebene Betriebsgrößen einer spezifischen Gruppe zugeordnet werden und abhängig von der Aggregationsfunktion kann eine verallgemeinerte Aussage über die gesamte Gruppe ermittelt werden. Ein Beispiel hierfür ist eine Durchschnittswertermittlung. Beispielsweise kann abhängig von einem jeweiligen Ladezustand von Energiespeichern im Kraftfahrzeug ein durchschnittlicher Ladezustand ermittelt werden. Vorteilhafterweise kann so das Ermitteln der Funktionseingangsgrößen sehr einfach erfolgen. Ferner ist es möglich, derart ermittelte Größen einfach auf vorgegebene Bezugsgrößen zu beziehen, um damit eine geeignete Entkopplung der Funktionseingangsgrößen von der Sensorkonfiguration des Kraftfahrzeugs zu erhalten.

In einer weiteren vorteilhaften Ausgestaltung umfasst die gesicherte Laufzeitumgebung eine virtuelle Maschine.

In einer weiteren vorteilhaften Ausgestaltung ist die gesicherte Laufzeitumgebung ausgebildet, Bytecode auszuführen. Der Bytecode umfasst eine vorgegebene Menge an Befehlen für eine virtuelle Maschine. Bei Kompilierung eines Quelltextes mancher Programmiersprachen oder Umgebungen, wie beispielsweise Java, wird nicht direkt ein Maschinencode, sondern ein Zwischencode, der Bytecode, erstellt. Dieser Code ist vorzugsweise unabhängig von einer realen Hardwareplatform und im Vergleich zum Quelltext oft relativ kompakt. Ausführungsbeispiele der Erfindung sind im Folgenden anhand der schematischen Zeichnung erläutert. Es zeigt:

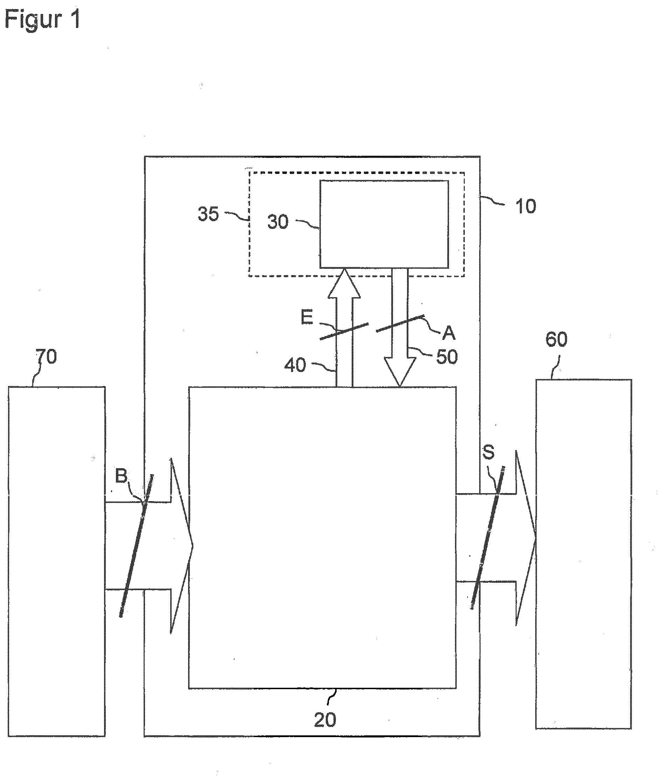

Figur 1 ein schematisches Blockschaltbild eines Ausführungsbeispiel der Steuereinheit zum Betreiben eines Kraftfahrzeugs.

Die Steuereinheit 10 ist in dem Kraftfahrzeug angeordnet. Das Kraftfahrzeug kann beispielsweise einen Hybridantrieb aufweisen. Für den Betrieb des Kraftfahrzeugs können mehrere Betriebsstrategien vorgegeben werden. Mittels der jeweiligen Betriebsstrategie wird beispielsweise die Art der Bereitstellung der benötigten Energie vorgegeben und/oder Verbrauchern im Kraftfahrzeug jeweils ein maximal zustehender Energieanteil der bereitgestellten Energie vorgegeben werden. Die Steuereinheit 10 weist beispielsweise eine Hardwareplatform mit einer Mikroprozessoreinheit auf. Unter Mikroprozessoreinheit ist dabei die Gesamtheit der zur Programmausführung verwendeten Hardware zu verstehen, insbesondere der eigentliche Mikroprozessor und/oder Mikrocontroller sowie flüchtige und nichtflüchtige Speicher, die bei der Programmausführung zur Ablage von Daten verwendet werden.

Basierend auf der Hardwareplatform weist die Steuereinheit 10 beispielsweise ein Basismodul 20 und ein Funktionsmodul 30 auf, die beispielsweise als Softwaremodule ausgebildet sind. Das Funktionsmodul 30 ist in einer gesicherten Laufzeitumgebung ausgebildet. Hierzu umfasst die gesicherte Laufzeitumgebung eine virtuelle Maschine 35. Die gesicherte Laufzeitumgebung kann beispielsweise durch Virtualisierung generiert werden. Die Virtualisierung ermöglicht das Erstellen eines ausführbaren Abbildes eines physikalischen Computersystems in Programmcode, dass es als virtuelle Maschine in ein Wirtssystem eingebettet und als Gastsystem darin ausgeführt werden kann.

Die gesicherte Laufzeitumgebung kann beispielsweise ausgebildet sein, Bytecode auszuführen.

Alternativ oder zusätzlich ist auch möglich, dass die gesicherte Laufzeitumgebung einen Interpreter umfasst. Als Interpreter wird in diesem Zusammenhang ein Computerprogramm bezeichnet, das einen Programm-Quellcode im Gegensatz zu Assemblern oder Compilern nicht in eine auf dem System direkt ausführbare Datei umwandelt, sondern den Quellcode einliest, analysiert und ausführt. Die Analyse des Quellcodes erfolgt zur Laufzeit des Programms.

Die Steuereinheit 10 weist ferner eine vorgegebene erste 40 und zweite Schnittstelle 50 auf, die jeweils vorzugsweise als Softwareschnittstelle ausgebildet sind.

Das Kraftfahrzeug weist eine Mehrzahl an Sensoreinheiten 70 und Aktuatoren 60 auf. Für ein Ansteuern der Aktuatoren 60 können jeweilige Stellgrößen S vorgegeben werden. Die Sensoreinheiten 70 sind jeweils ausgebildet, eine oder mehrere Betriebsgrößen B des Kraftfahrzeugs zu erfassen und/oder zu ermitteln. Die Sensoreinheiten 70 können für eine Messdatenerfassung beispielsweise jeweils einen oder mehrere Sensoren aufweisen. Ferner können die Sensoreinheiten 70 ausgebildet sein, Zustandsgrößen oder weitere Größen beispielsweise abhängig von den jeweiligen Messgrößen zu ermitteln.

Die jeweilige Betriebsgröße B kann beispielsweise repräsentativ sein für einen Leistungsverbrauch, eine Fahrpedalstellung, eine Motordrehzahl, eine Motorlast, eine Abgaszusammensetzung, eine Motortemperatur, eine Getriebeübersetzung, eine Fahrgeschwindigkeit, eine Raddrehzahl, einen Lenkwinkel, eine Drehrate (Gearmoment), einen Abstand zum vorausfahrenden Fahrzeug oder Hindernis, usw..

Dem Basismodul 20 können die von den jeweiligen Sensoreinheiten 70 erfassten und/oder ermittelten Betriebsgrößen B zugeführt werden.

Das Basismodul 20 ist ausgebildet, abhängig von zumindest einer Betriebsgröße B eine oder mehrere Funktionseingangsgrößen E zu ermitteln und die Funktionseingangsgrößen E an der ersten Schnittstelle 40 bereitzustellen. Beispielsweise kann das Funktionsmodul 30 ausgebildet sein, die zumindest eine Funktionseingangsgröße E abhängig von einer vorgegebenen Aggregationsfunktion zu ermitteln.

Die jeweilige Betriebsgröße kann beispielspielsweise eine aktuelle Drehmomentenabgabe einer jeweiligen elektrischen Antriebsmaschine des Kraftfahrzeugs repräsentieren. Im Falle dass das Kraftfahrzeug mehrere elektrische Antriebsmaschinen aufweist, z. B. zwei oder vier, kann beispielsweise eine durchschnittliche Drehmomentenabgabe aller elektrischen Antriebsmaschinen im Kraftfahrzeug ermittelt werden.

Das Funktionsmodul 30 ist ausgebildet abhängig von den an der ersten Schnittstelle 40 bereitgestellten Funktionseingangsgrößen E und einer vorgegebenen Menge an Regeln die eine oder die Ausgangsgrößen A zu ermitteln, die eine Betriebsstrategie aus einer Menge von vorgegebenen Betriebsstrategien charakterisieren. Ferner ist das Funktionsmodul 30 ausgebildet die Ausgangsgrößen A an der zweiten Schnittstelle 50 bereitzustellen.

Das Basismodul 20 ist ausgebildet abhängig von der zumindest einen Ausgangsgrößen A, die an der zweiten Schnittstelle 50 bereitgestellt wird, Stellgrößen S der Aktuatoren 60 zu ermitteln. Abhängig von den ermittelten Stellgrößen S können die Aktuatoren 60 angesteuert werden.

Für ein Bereitstellen eines Programmcodes für das Funktionsmodul 30 können beispielsweise bei einer Programmentwicklung die Regeln mittels eines Compilers in einen Parametersatz, zum Beispiel in den Bytecode für die virtuelle Maschine 35 oder in eine tabellarische Darstellung übersetzt werden. Dieser Parametersatz kann auf das Steuergerät übertragen werden. Insbesondere kann dieser Parametersatz unabhängig von Programmcode für das Basismodul 20 auf das Steuergerät übertragen werden. Diese Parametrierung der Regeln ermöglicht vorteilhafterweise, dass auch komplexe logische Funktionen von der Steuereinheit 10 verarbeitet werden können.

### Bezugszeichenliste

- 10: Steuereinheit
- 20: Basismodul
- 30: Funktionsmodul
- 35: virtuelle Maschine
- 40: erste Schnittstelle
- 50: zweite Schnittstelle
- 60: Aktuatoren des Kraftfahrzeugs
- 70: Sensoreinheiten des Kraftfahrzeugs

- A: Ausgangsgröße
- B: Betriebsgröße
- E: Funktionseingangsgröße
- S: Stellgröße

## Patentansprüche

1. Steuereinheit (10) zum Betreiben eines Kraftfahrzeugs, das eine Mehrzahl an Aktuatoren (60) aufweist, wobei die Steuereinheit (10) ein Basismodul (20) umfasst und ein Funktionsmodul (30), das in einer gesicherten Laufzeitumgebung ausgebildet ist, sowie eine vorgegebene erste (40) und zweite Schnittstelle (50), die jeweils das Basismodul (20) und das Funktionsmodul (30) koppeln, und
- bei dem das Basismodul (20) ausgebildet ist:
- - abhängig von zumindest einer Betriebsgröße (B), die einen Betriebszustand und/oder Fahrzustand und/oder einen Umgebungszustand des Kraftfahrzeugs charakterisiert, eine oder mehrere Funktionseingangsgrößen (F), die ein Systemverhalten des Fahrzeugs unabhängig von einer aktuellen Sensorkonfiguration des Fahrzeugs charakterisieren, zu ermitteln,
- - die Funktionseingangsgrößen (F) an der ersten Schnittstelle (40) bereitzustellen,
- - abhängig von einer oder mehreren Ausgangsgrößen (A), die ein gewünschtes Systemverhalten des Fahrzeugs unabhängig von einer aktuellen Aktuator-Konfiguration des Fahrzeugs charakterisieren und die an der zweiten Schnittstelle (50) bereitgestellt werden, Stellgrößen (S) der Aktuatoren (60) zu ermitteln und
- das Funktionsmodul (30) ausgebildet ist:
- - abhängig von den an der ersten Schnittstelle (40) bereitgestellten Funktionseingangsgrößen (F) und einer vorgegebenen Menge an Regeln die eine oder die Ausgangsgrößen (A) zu ermitteln, die eine Betriebsstrategie aus einer Menge von vorgegebenen Betriebsstrategien charakterisieren, wobei die Regeln bedingte Anweisungen umfassen, und
- - die Ausgangsgrößen (A) an der zweiten Schnittstelle (50) bereitzustellen.

2. Steuereinheit (10) nach Anspruch 1,
bei der das Funktionsmodul (30) ausgebildet ist, die zumindest eine Funktionseingangsgröße (F) abhängig von einer vorgegebenen Aggregationsfunktion zu ermitteln.

3. Steuereinheit (10) nach einem der vorstehenden Ansprüche, bei der die gesicherte Laufzeitumgebung eine virtuelle Maschine (35) umfasst.

4. Steuereinheit (10) nach einem der vorstehenden Ansprüche, bei der die gesicherte Laufzeitumgebung ausgebildet ist, Bytecode auszuführen.

## Claims

1. Control unit (10) for operating a motor vehicle that has a multiplicity of actuators (60), wherein the control unit (10) comprises a base module (20) and a function module (30) that is formed in a secure runtime environment, and a predefined first interface (40) and second interface (50) that each couple the base module (20) and the function module (30), and
- in which the base module (20) is designed:
- - depending on at least one operating variable (B) that characterizes an operating state and/or a driving state and/or an environment state of the motor vehicle, to determine one or more function input variables (F) that characterize a system behaviour of the vehicle independently of a current sensor configuration of the vehicle,
- - to provide the function input variables (F) at the first interface (40),
- - depending on one or more output variables (A) that characterize a desired system behaviour of the vehicle independently of a current actuator configuration of the vehicle and that are provided at the second interface (50), to determine manipulated variables (S) of the actuators (60) and
- the function module (30) is designed:
- - depending on the function input variables (F) provided at the first interface (40) and a predefined set of rules, to determine the one or more output variables (A) that characterize an operating strategy from a set of predefined operating strategies, wherein the rules contain conditional instructions, and
- - to provide the output variables (A) at the second interface (50).

2. Control unit (10) according to Claim 1,
in which the function module (30) is designed to determine the at least one function input variable (F) depending on a predefined aggregation function.

3. Control unit (10) according to either of the preceding claims,
in which the secure runtime environment comprises a virtual machine (35).

4. Control unit (10) according to one of the preceding claims,
in which the secure runtime environment is designed to execute bytecode.

## Revendications

1. Unité de commande (10) destinée à faire fonctionner un véhicule automobile qui présente une pluralité d'actionneurs (60), l'unité de commande (10) comprenant un module de base (20) et un module de fonction (30) qui est réalisé dans un environnement d'exécution sécurisé, ainsi qu'une première (40) et une deuxième interface (50) prédéfinies qui couplent respectivement le module de base (20) et le module de fonction (30), et
- le module de base (20) étant réalisé pour :
-- en fonction d'au moins une grandeur de fonctionnement (B) qui caractérise un état de fonctionnement et/ou un état de conduite et/ou un état d'environnement du véhicule automobile, établir une ou plusieurs grandeurs fonctionnelles d'entrée (F) qui caractérisent un comportement de système du véhicule indépendamment d'une configuration de capteur actuelle du véhicule,
-- fournir les grandeurs fonctionnelles d'entrée (F) à la première interface (40),
-- en fonction d'une ou de plusieurs grandeurs de sortie (A) qui caractérisent un comportement de système souhaité du véhicule indépendamment d'une configuration d'actionneur actuelle du véhicule et qui sont fournies à la deuxième interface (50), établir les grandeurs de réglage (S) des actionneurs (60), et
- le module de fonction (30) étant configuré pour :
-- en fonction des grandeurs fonctionnelles d'entrée (F) fournies à la première interface (40) et d'un ensemble prédéfini de règles, établir ladite une ou les grandeurs de sortie (A) qui caractérisent une stratégie de fonctionnement parmi un ensemble de stratégies de fonctionnement prédéfinies, les règles comprenant des instructions conditionnelles, et
-- fournir les grandeurs de sortie (A) à la deuxième interface (50).

2. Unité de commande (10) selon la revendication 1, dans laquelle le module de fonction (30) est réalisé pour établir ladite au moins une grandeur fonctionnelle d'entrée (F) en fonction d'une fonction d'agrégation prédéfinie.

3. Unité de commande (10) selon l'une quelconque des revendications précédentes, dans laquelle l'environnement d'exécution sécurisé comprend une machine virtuelle (35).

4. Unité de commande (10) selon l'une quelconque des revendications précédentes, dans laquelle l'environnement d'exécution sécurisé est réalisé pour exécuter du code à octets.
